(19) Europäisches Patentamt / European Patent Office / Office européen des brevets

(11) **EP 4 664 780 A1**

(12) **EUROPEAN PATENT APPLICATION**
published in accordance with Art. 153(4) EPC

(43) Date of publication:
**17.12.2025 Bulletin 2025/51**

(21) Application number: **23921225.1**

(22) Date of filing: **10.02.2023**

(51) International Patent Classification (IPC):
**H04B 7/0456** (2017.01)    **H01Q 15/14** (2006.01)
**H04B 7/0413** (2017.01)

(52) Cooperative Patent Classification (CPC):
**H01Q 15/14; H04B 7/0413; H04B 7/0456**

(86) International application number:
**PCT/JP2023/004650**

(87) International publication number:
**WO 2024/166396 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
**Tokyo 100-6150 (JP)**
• **YOSHIOKA, Shohei**
**Tokyo 100-6150 (JP)**
• **KURITA, Daisuke**
**Tokyo 100-6150 (JP)**
• **NAGATA, Satoshi**
**Tokyo 100-6150 (JP)**

• **ECHIGO, Haruhi**
**Tokyo 100-6150 (JP)**
• **MATSUMURA, Yuki**
**Tokyo 100-6150 (JP)**
• **LI, Xiang**
**Beijing 100190 (CN)**
• **HOU, Xiaolin**
**Beijing 100190 (CN)**
• **WANG, Xin**
**Beijing 100190 (CN)**
• **CHEN, Lan**
**Beijing 100190 (CN)**
• **WANG, Fan**
**Beijing 100190 (CN)**

(74) Representative: **Hoffmann Eitle**
**Patent- und Rechtsanwälte PartmbB**
**Arabellastraße 30**
**81925 München (DE)**

(54) **RELAY DEVICE, RELAY METHOD, AND BASE STATION**

(57)    A relay apparatus according to one aspect of the present disclosure includes a receiving section that receives configuration information related to control of an antenna element, and a control section that determines an antenna element to be used for a signal directed to a terminal, based on the configuration information. According to one aspect of the present disclosure, it is possible to appropriately perform communication in a radio communication system using a sub-terahertz band.

FIG. 11

**EP 4 664 780 A1**

Processed by Luminess, 75001 PARIS (FR)

**Description**

Technical Field

The present disclosure relates to a relay apparatus, a relay method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR and beyond), use of a sub-terahertz band is under study.

However, in the use of such a high frequency band, details and sufficient study for realizing a high data rate/wide coverage have not been conducted. Unless the details are definite, communication quality/system throughput may be degraded/reduced.

Thus, an object of the present disclosure is to provide a relay apparatus, a relay method, and a base station for appropriately performing communication in a radio communication system using a sub-terahertz band.

Solution to Problem

A relay apparatus according to one aspect of the present disclosure includes a receiving section that receives configuration information related to control of an antenna element, and a control section that determines an antenna element to be used for a signal directed to a terminal, based on the configuration information.

Advantageous Effects of Invention

According to one aspect of the present disclosure, it is possible to appropriately perform communication in a radio communication system using a sub-terahertz band.

Brief Description of Drawings

[FIG. 1] FIGS. 1A and 1B are diagrams to show examples of a user in a high-frequency band.
[FIG. 2] FIG. 2 is a diagram to show an example of communication using a configuration of an NCR.
[FIG. 3] FIG. 3 is a diagram to show an example of communication using an RIS.
[FIG. 4] FIGS. 4A to 4C are diagrams to show examples of far-field and near-field beamforming methods.
[FIG. 5] FIG. 5 is a diagram to show an example of system architecture including the RIS.
[FIG. 6] FIG. 6 is a diagram to show an example of a precoder according to Embodiment 1-1-1.

[FIG. 7] FIG. 7 is a diagram to show an example of a reference point.

[FIG. 8] FIG. 8 is a diagram to show an example of a precoder according to Embodiment 1-1-2.

[FIG. 9] FIG. 9 is a diagram to show an example of a uniform grid in orthogonal coordinates.

[FIG. 10] FIG. 10 is a diagram to show an example of a non-uniform grid in spherical coordinates.

[FIG. 11] FIG. 11 is a diagram to show an example of aperture adaptation according to Embodiment 2-1-1.

[FIG. 12] FIG. 12 is a diagram to show an example of aperture adaptation according to Embodiment 2-1-2.

[FIG. 13] FIG. 13 is a diagram to show another example of the aperture adaptation according to Embodiment 2-1-2.

[FIG. 14] FIGS. 14A to 14C are diagrams to show examples of a mode related to an aperture.

[FIG. 15] FIGS. 15A to 15C are diagrams to show examples of RIS implementations according to Options 3-1-1 to 3-1-3, respectively.

[FIG. 16] FIG. 16 is a diagram to show an example of a schematic structure of a radio communication system according to one embodiment.

[FIG. 17] FIG. 17 is a diagram to show an example of a structure of a base station according to one embodiment.

[FIG. 18] FIG. 18 is a diagram to show an example of a structure of a user terminal according to one embodiment.

[FIG. 19] FIG. 19 is a diagram to show an example of a hardware structure of the base station and the user terminal according to one embodiment.

[FIG. 20] FIG. 20 is a diagram to show an example of a vehicle according to one embodiment.

Description of Embodiments

(Use of Sub-Terahertz Wave)

For future radio communication systems (for example, in 6G and beyond), implementing a 100Gbps data-rate while maintaining sufficient coverage by using a sub-terahertz (for example, from 100 GHz to 300 GHz) band (spectrum) which is a higher frequency band than a frequency band for existing systems (for example, NR Rel. 15/16/17) is under study.

One of problems in such a study is to design a line of sight (LOS) - MIMO (Multi Input Multi Output) transmission scheme suitable for access links, aiming at 100 GHz, 100 Gbps, and (coverage of) 100m.

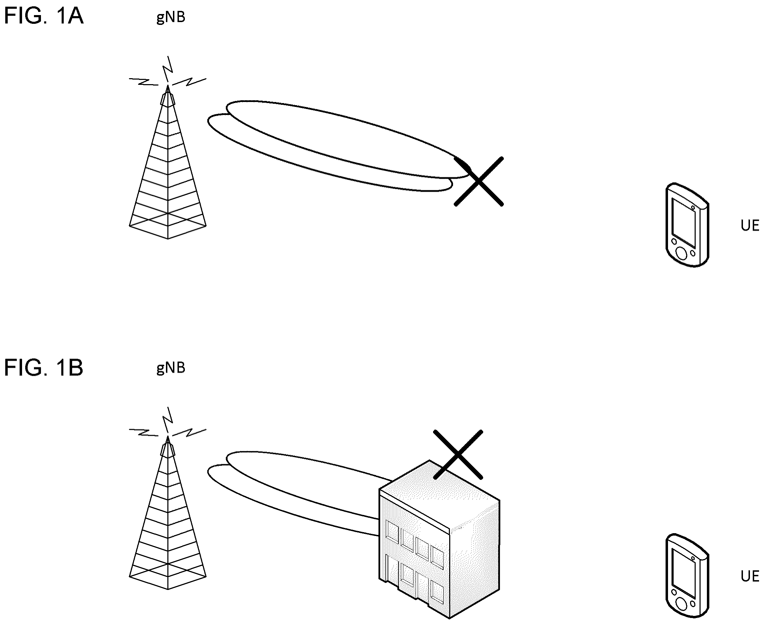

FIG. 1A is a diagram to show an example of a distant user in a high-frequency band. In the example shown in FIG. 1A, regular orthonormal transmission cannot be performed for a distant user because of limitation on a size of a mega-MIMO base stations (BS).

FIG. 1B is a diagram to show an example of a non-line of site user in a high-frequency band. For a non-line of sight (NLOS) user, blockage (e.g., buildings, or the like) prevents efficient LOS-MIMO transmission.

In existing NR MIMO (NR MIMO), LOS-MIMO is not supported. In the existing NR, a very wide bandwidth is required to achieve a 100 Gbps rate, and it is difficult to secure such bandwidth.

The NR MIMO is designed for an antenna far-field that supports only rank-1 transmission per polarization direction in an LOS channel. Using dual polarization allows multiplexing of rank 2, but a higher rank than rank 2 is not available. To achieve 100 Gbps, a bandwidth of several tens of GHz are required, which is difficult to achieve in practical systems and high-level demands are applied to RF components.

An LOS-MIMO scheme that has been already studied has a problem that it is not suitable for an access link or a necessary array size is too large because it is necessary to fix transmission and reception positions.

Therefore, introduction of a fixed antenna array with a large interval, OAM (orbital angular momentum) - MIMO, mega MIMO using an RIS (Reconfigurable Intelligent Surface) (RIS-aided Mega MIMO), and the like is under study.

For an NCR (network-controlled repeater) of Rel. 18 and later versions, multi-layer transmission is not supported in terms of channels, hardware and specifications (standards).

In terms of channels, in an LOS scenario, the size of the NCR array is relatively small and thus a channel between the BS and the NCR (BS-NCR) is of rank 1. In terms of hardware, in a case of a single RF chain of NCR, for example, for hardware cost reduction, a channel in which the BS, the NCR, and the UE are cascaded (BS-NCR-UE cascaded channel) is a rank 1 keyhole channel. In terms of specifications, the number of beams of an access link (A link)/backhaul link (B link) is one, and signals with high correlation are generated.

(RIS (Reconfigurable Intelligent Surface))

For future radio communication systems, introducing an RIS (Reconfigurable Intelligent Surface (RIS)) in a communication network is under study.

An RIS is an example of an apparatus for deploying a network in a flexible and cost-effective approach compared to new types of network (NW) nodes such as Integrated Access and Backhaul (IAB), an RF repeater, an NCR (Network-controlled Repeater), and the like.

The RIS may be configured with a plurality of reconfigurable scattering components.

The RIS may control a direction of a reflected signal and may control a direction of a transmitted (refracted) signal.

In the present disclosure, reflection, transmission, and refraction may be interchangeably interpreted.

While the NCR amplifies a relayed signal, the RIS may not require an RF amplifier. This enables reduction of power consumption.

While the RIS can achieve beam gain with narrow band beams, an increased number of RIS beams (beams reflected/refracted by the RIS) is required.

The RIS may reflect/refract signals of other frequency than a target frequency.

Materials such as liquid crystal, metal, and semiconductor may be used for the RIS. For example, in the RIS using liquid crystal, beam sweeping speed is slower than that in a case using a semiconductor, and it is conceivable that the RIS using liquid crystal is not suitable for the current beam sweeping operation.

The RIS may be installed on an object, such as a building, due to its thin and flexible shape.

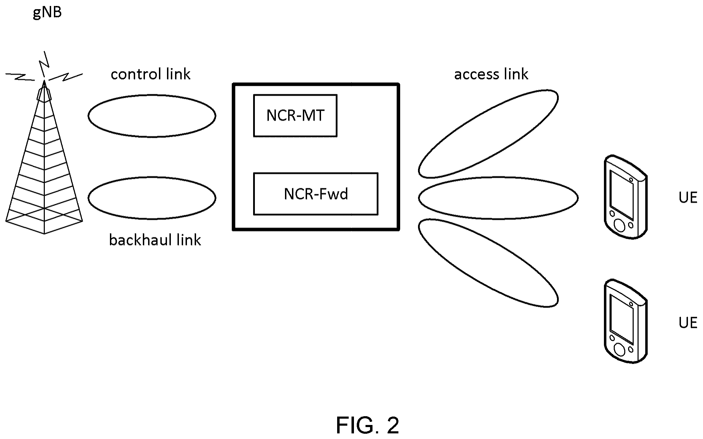

FIG. 2 is a diagram to show an example of communication using a configuration of an NCR. The NCR may include NCR-mobile termination (MT) and NCR-forwarding (Fwd). The NCR-MT communicates with the BS (gNB) via a control link.

The communication between the NCR-MT and the BS may include at least one of receiving configuration/indication/control information from the BS and transmitting a request/report/response to the BS. The NCR-Fwd relays communication between the BS and the UE by performing relay/amplification from a backhaul link to an access link and relay/amplification from the access link to the backhaul link.

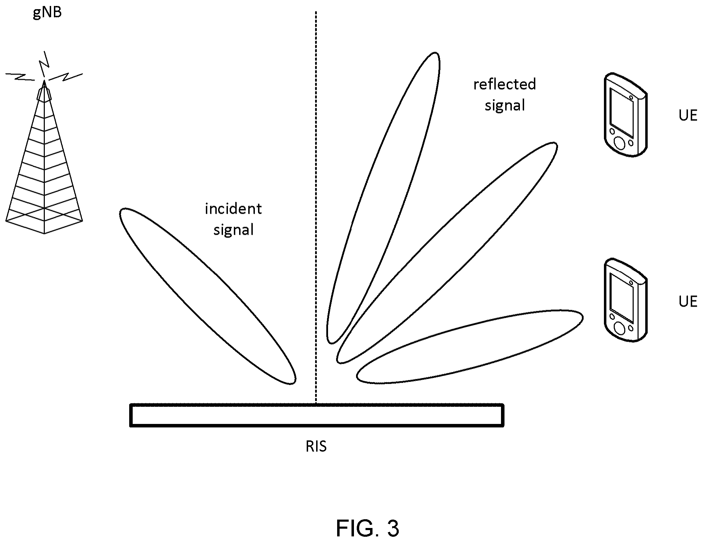

FIG. 3 is a diagram to show an example of communication using an RIS. The RIS relays communication between the BS and the UE by controlling a reflection angle in at least one of reflection from the backhaul link to the access link and reflection from the access link to the backhaul link.

(Far-Field And Near-Field Beamforming Method)

A plurality of methods are being studied as methods of existing far-field (FF) and near-field (NF) beamforming.

For example, the beamforming methods may be DFT-based beamforming (BF), beamfocusing with optimum phases, and beamfocusing with a near-field (NF) steering vector.

The DFT-based BF may be mainly used for signal transmission to a terminal at a far field. In DFT-based BF, a precoder (matrix) based on an angle-dependent linear phase may be used.

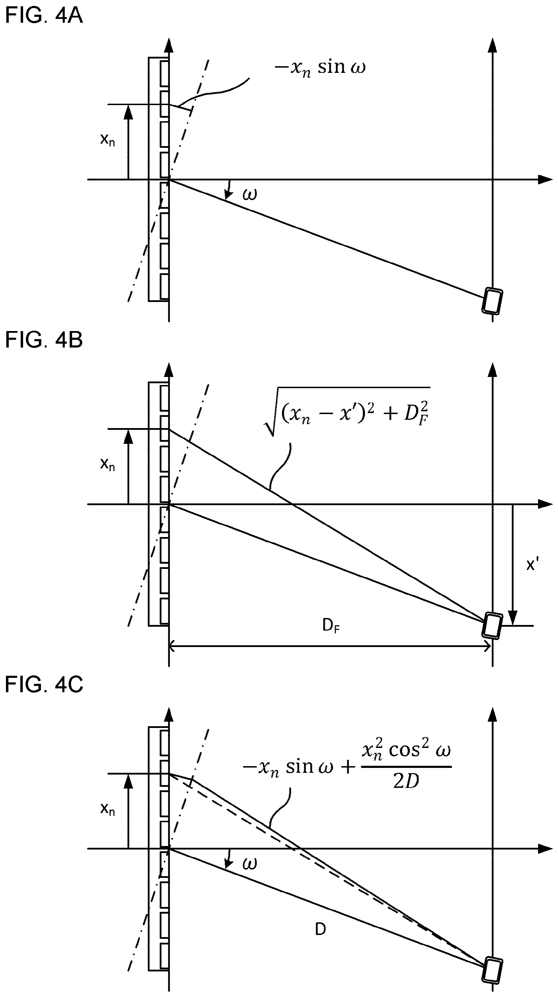

FIG. 4A is a diagram to show an example of DFT-based beamforming (BF). Note that FIG. 4A shows an example of a uniform and linear array. In this example, $x_n$ is a distance from the array center to an element n in the array, and $\omega$ is an angle of a beam with respect to an axis perpendicular to the array.

Beamfocusing with optimal phase may be mainly used for signal transmission to a terminal at a near field. For beamfocusing with optimal phase, a precoder (matrix) based on position (distance)-dependent non-linear phase may be used.

FIG. 4B is a diagram to show an example of beamfocusing with optimal phase. Note that FIG. 4B shows an example of a uniform and linear array. In this example, $D_F$ is the focal length and x' is a distance from the axis perpendicular to the array to the focal point.

Beamfocusing with a near-field steering vector may be mainly used for signal transmission to a terminal at a near field. For beamfocusing with a near-field steering vector, a precoder (matrix) based on an angle- & position (distance)-dependent quadratic phase may be used.

FIG. 4C is a diagram to show an example of beamfocusing with a near-field (NF) steering vector. Note that FIG. 4C shows an example of a uniform and linear array. In this example, D is a distance from the center of the array to the focal point, and $\omega$ is an angle from an axis perpendicular to the array to a line connecting the center of the array and the focal point.

(System Architecture Including RIS)

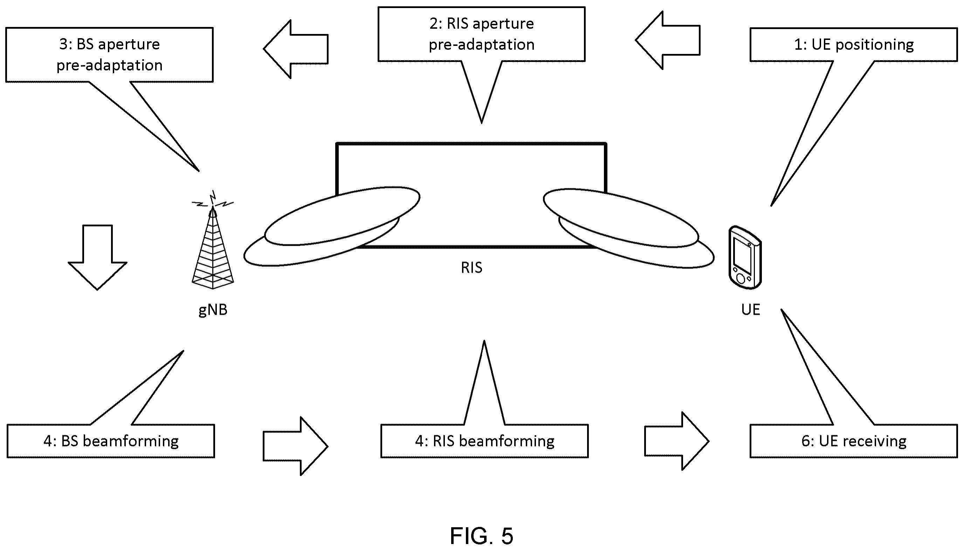

FIG. 5 is a diagram to show an example of system architecture including the RIS. The system architecture including the RIS is described below with reference to FIG. 5, but this is merely an example.

The system architecture including the RIS may include a plurality of (e.g., two) design phases.

For example, the system architecture including the RIS may include an aperture pre-adaptation phase.

In the aperture pre-adaptation phase, first, positioning of the UE may be performed. In the positioning of the UE, the UE may report information related to a position/attitude of the UE to a network (NW). In the positioning of the UE, the NW (base station) may estimate information related to the position/attitude of the UE, based on a signal (e.g., UL RS) transmitted from the UE.

Note that the positioning of the UE in the aperture pre-adaptation phase may be omitted.

Then, in the aperture pre-adaptation phase, pre-adaptation of an aperture (e.g., antenna element) of the RIS may be performed.

In the present disclosure, aperture adaptation may mean determining/judging/selecting an antenna element/array to be used.

Then, in the aperture pre-adaptation phase, pre-adaptation of an aperture (e.g., antenna element) of the BS may be performed.

The system architecture including the RIS may include a beamforming phase.

The beamforming phase may be performed, for example, subsequent to the aperture pre-adaptation phase.

In the beamforming phase, first, beamforming may be performed in the BS.

Then, in the beamforming phase, beamforming in the RIS may be performed.

Then, in the beamforming phase, reception by the UE may be performed. The UE may use a CSI reception (CSIR) based MIMO receiver.

Note that the reception by the UE in the beamforming phase may be omitted.

(Analysis)

For future radio communication systems, it is under study to utilize an RIS (for example, a (large) RIS repeater) and intend to realize LOS-MINO by using a channel cascaded by a BS, the RIS, and a UE, thereby extending a transmission distance.

Specifically, for example, use of a plurality of RTCs (Ring-Type Codebooks, for example, dual RTCs) is under study. In this case, an RIS repeater with the RTC may function essentially the same as a so-called lens that focuses the transmission signal onto the UE to enhance the signal.

For example, it is under study to use conjugate symmetric focal points to make a plurality of signal streams coincide on UE antennas at the same time, and obtain substantially equal gains.

For example, it is under study to control/adjust a beam pattern of the RIS so that the crosstalk interference is substantially zero by using aperture (for example, antenna element) adaptation of a joint BS-RIS.

For dual RTC, the RIS repeater with RTC may converge electromagnetic waves radiated from an antenna of the base station to an array surface of the UE like a lens, and form an image of the UE, so to speak.

It is conceivable that the dual RTC can realize accurate focusing by adjusting an effective focal length to a distance between the BS and the RIS and a distance between the RIS and the UE.

By adjusting the focal length to the antenna of the UE and in combination with the use of the conjugate symmetric focus, signal strength can be enhanced.

In the use of conjugate symmetric focus, it is conceivable that the focal positions of the two RTCs can be chosen to be conjugate symmetric to obtain approximately equal gain because the plurality of signal streams match the UE antennas/subarrays.

A finite size RIS may generate sidelobes that may cause crosstalk interference.

Therefore, aperture adaptation of the RIS allows formation of a beam pattern (e.g., null-to-null spacing and sidelobe direction) at any position/direction of the UE array, and suppression of crosstalk interference. This enables, for example, realization of transmission without CSI (CSI-free) by canceling interference, realization of improvement of SNR by reducing interference, realization of improvement of robustness by suppressing interference, and the like.

It is also conceivable that the use of the system described above can provide access links with transmission distances 100 m or more and peak data rates of approximately 180 Gbps (four layers, 256 QAM).

Performing orthonormal spatial multiplexing supporting transmission without using CSI (CSI-free transmission), full CSI is not required for beam design of the RIS, and end-to-end CSI transmitter (CSIT) in the BS related to precoding is not required.

Furthermore, it is possible to support a robust design that achieves an average data rate of 100 Gbps or more within an error at a position of 10 cm.

However, in using a high frequency band such as a sub-terahertz spectrum, the above-described aspects to be studied are not clear. More specifically, in a system using the RIS, the design of a codebook/precoder in reflection/refraction of a signal in the RIS and the implementation of the RIS have not been sufficiently studied. Unless these studies are insufficient, communication quality/system throughput may be degraded/reduced.

Thus, the inventors of the present invention came up with the idea of a method for solving the above problems.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from a core network such as a positioning protocol (for example, an NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an aperture, an antenna array, an array, a subarray (a plurality of antenna elements, a part of an array), a panel, an RIS, an RIS array, a scattering element array, and the like may be interchangeably interpreted. In the present disclosure, an antenna, an antenna element, a scattering element, and the like may be interchangeably interpreted.

In the present disclosure, an NCR, an RIS, an NCR including RIS, a network node, an apparatus, an IAB, an IAB-MT (Mobile Termination), an IAB-DU (Distribution Unit), an IAB-CU (Central Unit), a terminal, a base station, a relay station, a relay apparatus, a repeater, a reflector, a transparent plate, an RIS-NCR, an RIS type NCR, an extended NCR, and the like may be interchangeably interpreted.

In the embodiments of the present disclosure, the RIS (RIS-NCR) is described below as an example, but these names are merely examples.

In the present disclosure, a radio communication method and a relay method may be interchangeably interpreted.

(Radio Communication Method)

<First Embodiment>

The first embodiment relates to codebook/precoder design.

The codebook/precoder may be a codebook/precoder for a near field (NF) or a codebook/precoder for a far field (FF).

In the present disclosure, the near field may mean a distance smaller than (or equal to or less than) a specific threshold value. In the present disclosure, the far distance may mean a distance greater than (or equal to or greater than) a specific threshold value.

The RIS (RIS-NCR) may receive information for the precoder/codebook from the NW. The information may be, for example, information related to a position of another node (e.g., UE/NW node). The information related to the position may be, for example, at least one of information related to an angle and information related to a distance.

The first embodiment is broadly classified into Embodiments 1-1 and 1-2. Embodiment 1-1 or 1-2 below may be applied, or Embodiments 1-1 and 1-2 below may be applied in combination.

<<Embodiment 1-1>>

Embodiment 1-1 relates to a concrete codebook/precoder design.

Embodiment 1-1 is broadly classified into Embodiments 1-1-1 to 1-1-4. Any of Embodiments 1-1-1 to 1-1-4 below may be applied, or at least two of Embodiments 1-1-1 to 1-1-4 below may be applied in combination.

The precoder may be calculated as an output as a result of a specific multiplication of a plurality of different precoders/matrices, for example.

In the present disclosure, a codebook, a precoder, a codeword, a matrix, a term, a vector, and an element may be interchangeably interpreted.

{Embodiment 1-1-1}

The precoder in the RIS may be a precoder that decouples an angle dependent term and a distance (position) dependent term.

The codebook/precoder described in the present embodiment may be referred to as a single-sided NF codebook/precoder.

Embodiment 1-1-1 may be used for beamforming/focusing of an NCR including an RIS (RIS-NCR), for example.

The precoder in the RIS may be calculated, for example, by a product (e.g., Hadamard product (e.g., a product per element)) of a distance-dependent precoder/matrix (e.g., $W_{Ring}$) and an angle-dependent precoder/matrix (e.g., $W_{DFT}$).

For example, the precoder may be calculated by the following Equation 1.

[Math. 1]

$$W = W_{Ring} \circ W_{DFT}$$
$$= \left[ \exp\left( j\frac{2\pi\sqrt{x_0^2 + D_F^2}}{\lambda} \right) \quad \exp\left( j\frac{2\pi k}{ON} + j\frac{2\pi\sqrt{x_1^2 + D_F^2}}{\lambda} \right) \quad \cdots \right.$$
$$\left. \exp\left( j\frac{2\pi(N-1)k}{ON} + j\frac{2\pi\sqrt{x_{N-1}^2 + D_F^2}}{\lambda} \right) \right]$$

(Equation 1)

Here, $D_F$ may be an axial distance between an array and the focal position. Quantization of a distance will be described in detail in following Embodiment 1-2.

Note that, in the present disclosure, a phase shift associated with the distance-dependent precoder may be referred to as a ring-type phase distribution. In the present disclosure, a codebook related to a distance-dependent precoder may be referred to as a ring-type codebook (RTC).

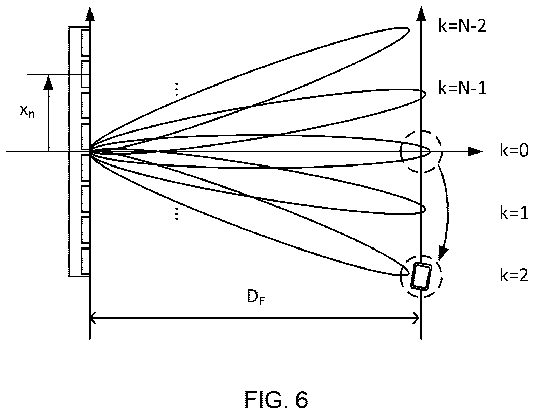

FIG. 6 is a diagram to show an example of a precoder according to Embodiment 1-1-1. In FIG. 6, an example of a uniform and linear array is shown. In the example shown in FIG. 6, first, beam focusing in the boresight is performed. The distance-dependent precoder described above may be used for the beamfocusing. k is an index corresponding to a phase in DFT.

In the example shown in FIG. 6, a shifting of the focus position by the DFT vector is then performed. The angle-dependent precoder described above may be used for the shifting.

According to Embodiment 1-1-1, using the angle dependent term and the distance (position) dependent terminal enables appropriate transmission of a signal to a far-field target and a near-field target, and easy implementation.

{Embodiment 1-1-2}

The precoder in the RIS may be a precoder that uses a piecewise linear approximation with DFT vectors.

The codebook/precoder described in the present embodiment may be referred to as a single-sided NF codebook/precoder.

For example, the precoder may be a precoder including a term per subarray (one or more arrays) and a distance (position) dependent term.

Embodiment 1-1-2 may be used for, for example, at least one of beamforming/focusing of an NCR including an RIS (RIS-NCR) and coherent transmission of a plurality of panels (for example, panels arranged at wide intervals).

Embodiment 1-1-2 is suitable for a subarray based RIS-NCR.

The precoder in the RIS may be calculated, for example, by a product (e.g., Hadamard product (e.g., a product per element)) of a precoder per subarray (one or more arrays) and an angle-dependent precoder.

The precoder per subarray (one or more arrays) may be represented by, for example, a product of a phase offset for each subarray and an angle offset of the subarray.

For example, the precoder may be calculated by the following Equation 2.

[Math. 2]

$$W^{(i,j)} = \varphi_{PO}^{(i,j)} W_{AO}^{(i,j)} \circ W_{DFT}$$

(Equation 2)

Here, $\varphi^{(i,j)}_{PO}$ may indicate a phase offset of subarray $(i, j)$. The phase offset of subarray $(i, j)$ may be quantized with a specific bit (e.g., b bit(s)) that may take a specific value (e.g., a value from 0 to $2\pi$). $W^{(i,j)}_{AO}$ may denote an angular offset of subarray $(i, j)$.

$W^{(i,j)}_{AO}$ may be calculated based on an inner product of a vector from a reference point of an array to a reference point of subarray (i, j) and a vector from the reference point of subarray (i, j) to an antenna element (m, n) in subarray (i, j).

For example, $W^{(i,j)}_{AO}$ may be calculated by the following Equation 3.

[Math. 3]

$$\left[ W^{(i,j)}_{AO} \right]_{(m.n)} = \exp \left( j \frac{2\pi}{\lambda D} \vec{r}^{(i,j)}_{SA} \cdot \vec{r}^{(m,n)}_{AE} \right) \qquad \text{(Equation 3)}$$

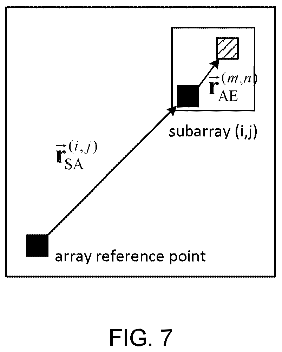

Here, D may be a distance from an array (e.g., a reference point of the array) to a target (e.g., a UE). $r^{(i,j)}_{SA}$ may indicate a vector from the reference point of the array to the reference point of subarray (i, j), and $r^{(m,n)}_{AE}$ may indicate a vector from the reference point of subarray (i, j) to the antenna element (m, n) in subarray (i, j) (see FIG. 7).

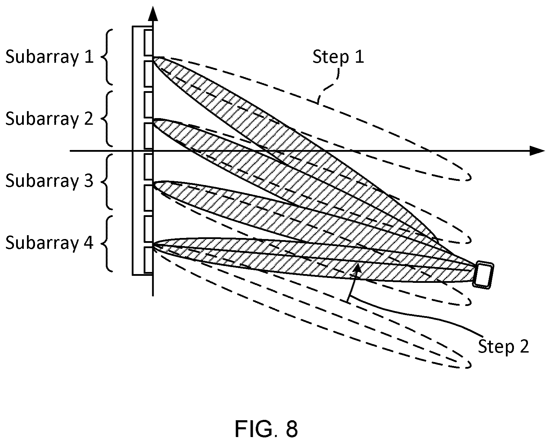

FIG. 8 is a diagram to show an example of a precoder according to Embodiment 1-1-2. In FIG. 8, an example of a uniform and linear array is shown. In the example illustrated in FIG. 8, first, focusing in a beam direction by phase offset is performed for a plurality of arrays (for each subarray) (step 1). For the beamfocusing, a precoder based on the phase offset and the angle offset described above may be used.

In the example shown in FIG. 8, the shifting of the focal position by the DFT vector is then performed (step 2). The angle-dependent precoder described above may be used for the shifting.

According to Embodiment 1-1-2, using a term per subarray (one or more arrays) and a distance (position) dependent term enables appropriate transmission of a signal to a far-field target and a near-field target.

{Embodiment 1-1-3}

The precoder in the RIS may be a precoder in which a term related to a near field and a term related to a far field are used.

The codebook/precoder described in the present embodiment may be referred to as a single-sided NF codebook/precoder.

Embodiment 1-1-3 may be used, for example, for acquiring CSI in either or both of FF and NF (not limited to FF and NF), or may be used for localization/sensing of NF.

The precoder in the RIS may be calculated, for example, by a product (e.g., Kronecker product (e.g., a product per element)) of a first precoder and a second precoder. The first/second precoder may include a term corresponding to a far field (or angle dependence) and a term corresponding to a near field (or distance dependence).

The precoder in the present embodiment may be applied in a uniform planar array.

For example, the precoder W may be expressed by the following Equation 4.

[Math. 4]

$$W = W_{N_1,O_1,k_1,D,L_1} \otimes W_{N_2,O_2,k_2,D,L_2} \qquad \text{(Equation 4)}$$

Here, W is expressed by Kronecker product of $W_{N\_1, O\_1, k\_1, D, L\_1}$, which is the first precoder, and $W_{N\_2, O\_2, k\_2, D, L\_2}$, which is the second precoder.

$W_{N\_i, O\_i, k\_i, D, \text{ and } L\_i}$ may be expressed by, for example, the following Equation 5.

[Math. 5]

$$\left[ W_{N_i,O_i,k_i,D,L_i} \right]_n = \exp \left( 2\pi j \frac{n k_i}{O_i N_i} + \pi j \frac{(n^2 - n N_{RP})(L_i^2 - k_i'^2)}{O_i^2 N_i^2 D} \right)$$

$$\text{n}=0,1,...,O_i N_i - 1$$

$$k_i=0,1,...,O_i N_i - 1$$

$$k'_i = \begin{cases} k_i & \text{if } k_i \leq O_i N_i/2 \\ O_i N_i - k_i & \text{otherwise} \end{cases}$$

$$\text{i}=1,2 \qquad \text{(Equation 5)}$$

Here, the number $N_i$ of antenna elements (scattering elements) in the i-th axis direction and the number $O_i$ of oversamples in the i-th axis direction in the RIS array may be the same as those in the NR DFT-based codebook defined in the existing NR. i = 1 may correspond to the x-axis direction (horizontal direction). i = 2 may correspond to the z-axis direction (vertical direction). $k_i$ may be a codeword index, and k' may represent a second order term.

$N_{RP}$ may be a value depending on the reference point of the RIS array. For example, the $N_{RP}$ may be calculated by $N_{RP} = 2 (d_{RP} - d_0)/\Delta d$.

For example, $d_{RP} - d_0$ may represent a distance between a specific antenna element (e.g., antenna element #0) and a reference point, and $\Delta d$ may represent an antenna element interval.

For example, when the bottom left element of the array is used as the reference point, $N_{RP}$ may be 0.

For example, when the center coordinate of the array is used as the reference point, $N_{RP}$ may be calculated as $N_i - 1$.

D may denote a normalized distance between the reference point and the focal length. For example, D may be calculated as (focal length)/$\lambda$.

L may be a value related to a normalized equivalent aperture. L may be calculated by, for example, $ON \cdot \Delta d/\lambda$.

{Embodiment 1-1-4}

The precoder in the RIS may be a precoder in which a precoder related to an access link (between the UE and the RIS) and a precoder related to a backhaul link (between the BS and the RIS) are used.

For example, the precoder may be a precoder including a term per subarray (one or more arrays) and a distance (position) dependent term.

Embodiment 1-1-4 may be used for, for example, at least one of beamforming/focusing of an NCR including an RIS of a backhaul link/access link (RIS-NCR) and cascaded LoS-MIMO (for example, LoS-MIMO requiring joint focal points indication).

The precoder in the RIS may be calculated by, for example, a product (for example, Hadamard product (e.g., a product per element)) of the precoder related to the access link and the precoder related to the backhaul link.

For example, the precoder may be calculated by the following Equation 6.

[Math. 6]

$$W = W_{AC} \circ W_{BH} \qquad\qquad \text{(Equation 6)}$$

Here, the $W_{AC}$ may indicate a precoder of a beam (an access beam, a beam for a UE) in an access link of the RIS-NCR. The $W_{BH}$ may indicate a precoder of a beam (a backhaul beam, a beam for BS) in the backhaul link of the RIS-NCR.

At least one of $W_{AC}$ and $W_{BH}$ may be a precoder calculated by at least one of the methods described in the above-described Embodiments 1-1-1 to 1-1-3, for example.

The focal lengths of $W_{AC}$ and $W_{BH}$ may be selected/determined independently or jointly. For example, the focal lengths of $W_{AC}$ and $W_{BH}$ may be selected/determined in a conjugate symmetric manner.

According to Embodiment 1-1-4, it is possible to appropriately design a precoder/codebook not only in the access link but also in the backhaul link.

[Parameters Related to Codebook/Precoder]

The parameters of Equations/Expressions in the above-described Embodiment 1-1 will be described below.

L may be a parameter related to an aperture (for example, an antenna element). L may be reported as capability of an RIS-NCR (NCR-MT).

L may be reported by the RIS as, for example, antenna number (the number of antennas)/spacing in n dimensions (e.g., n is 2).

L may be reported by the RIS, for example, as the length of a side of the RIS (e.g., antenna number * antenna spacing).

$N_i$, $O_i$, $k_i$, $k_{ip}$, and $D_i$ (i = 1 or 2) may be parameters related to a codebook of the access link/backhaul link.

$N_i$ and $O_i$ may be associated with a codebook of the RIS. The codebook of the RIS may be configured in advance for the RIS, or may be defined in advance in a specification.

$N_i$ and $O_i$ may be determined based on reporting of capability of the RIS or may be determined independently of the dimensions of the RIS.

The $k_i$ may be associated with a codebook of the RIS. The codebook of the RIS may be indicated to the RIS.

$k_{ip}$ may be calculated at the RIS, based on a specific configuration/indication for the RIS.

$D_i$ (e.g., i = 1) may be a parameter related to a distance between the BS and the RIS. $D_i$ (e.g., i = 2) may be a parameter related to a distance between the UE and the RIS.

For example, $D_1$ may be configured for the RIS by the BS in advance, and $D_2$ may be indicated for the RIS by the

BS.

For example, $D_1$ and $D_2$ may be indicated by the BS (using a single CW (compound CW)).

For example, $D_1$ may be configured for the RIS by the BS, and $D_2$ may be measured by the RIS.

For example, $D_1$ and $D_2$ may be measured by the RIS.

For example, logarithmic quantization may be used to determine $D_1$ and $D_2$.

$N_{RP}$ may be a parameter related to a reference point of the RIS. $N_{RP}$ may be, for example, a parameter related to an offset of the reference point of the RIS.

$N_{RP}$ may be associated with a codebook of the RIS. The codebook of the RIS may be indicated to the RIS.

The reference point of the RIS may refer to a specific position

For example, the reference point of the RIS may be a position of the antenna/subarray at a specific position (e.g., the bottom leftmost).

For example, the reference point of the RIS may be a position of the center point of the RIS. This case is suitable for a single large RIS or for a plurality of separate subarrays.

For example, the reference point of the RIS may be reported by the RIS. The reference point of the RIS may be determined according to the reference point reported by the RIS.

A parameter indicating an adaptation (aperture adaptation) mode may be defined. The parameters may be used for aperture control of the RIS.

The parameter indicating the adaptation mode may be associated with a codebook of the RIS. The codebook of the RIS may be indicated to the RIS.

A parameter indicating the shape/size of the RIS may be defined. The parameters may be used for aperture control of the RIS.

The parameter indicating the shape/size of the RIS may be associated with the codebook of the RIS. The codebook of the RIS may be indicated to the RIS.

The parameter may be indicated by a bitmap. The parameter may be indicated by the direction and length of two sides of the aperture forming a parallelogram. The parameter may be indicated by an arrangement of the subarray (e.g., direction/interval/subarray number/subarray size). The parameter may be indicated by at least one of the direction/length (which may be referred to as a general mode) of two sides of the aperture forming a parallelogram, the subarray number (sampling rate), and the subarray size.

A parameter indicating a roll-off factor may be defined.

A parameter for conjugate symmetric RTCs may be defined. The parameter may be a parameter related to a reference point related to a position of a UE.

The reference point related to the position of the UE may mean, for example, an antenna port (e.g., antenna port #0) of a specific UE.

The reference point related to the position of the UE may refer to a specific (e.g., central) UE array configured by the BS, for example.

<<Embodiment 1-2>>

In Embodiment 1-2, quantization of an angle (angle information) and a distance (distance information) in notification of a codebook (for NW/RIS-NCR) will be described.

Embodiment 1-2 is broadly classified into Embodiments 1-2-1 and 1-2-2. Any of Embodiments 1-2-1 and 1-2-2 below may be applied, or Embodiments 1-2-1 and 1-2-2 below may be applied in combination.

The NW (or RIS-NCR) may transmit, to the RIS-NCR (or NW), the angle information/distance information related to the codebook/precoder quantized using at least one of Embodiments 1-2-1 and 1-2-2.

{Embodiment 1-2-1}

Quantization related to an angle and quantization related to a distance may be performed separately (independently).

For the angle, a specific quantization method may be used.

The specific quantization method may be, for example, a DFT-based quantization method.

Using the DFT based method for the quantization of the angle enables quantization suitable for a unified design for the FF and the NF.

For example, linear quantization may be used for the distance. Using linear quantization facilitates implementation of the apparatus.

For example, logarithmic quantization may be used for the distance. Using the logarithmic quantization enables appropriate quantization regardless of whether a distance between apparatuses corresponds to the far field or the near field.

The quantization for the distance may be performed using the following Expression 7.
[Math. 7]

$$D_n \leftarrow b^n \cdot d_0, \quad n = 0,1,2,\dots \qquad \text{(Expression 7)}$$

In the present disclosure, a range of NF may relate to the array area. For example, the range of NF may be (approximately) proportional to the array area.

{Embodiment 1-2-2}

Quantization related to the angle and quantization related to the distance may be performed jointly.
For example, the quantization related to the angle and distance may use a uniform grid in orthogonal coordinates (Cartesian coordinates(the angle and distance may be quantized on a uniform grid). This case can be suitably used in localization/position-based beamfocusing.
For example, the quantization related to the angle and distance may use a non-uniform grid in spherical coordinates (the angle and distance may be quantized on a non-uniform grid). This is preferable in terms of aperture/NF range at boresight, and using wider beams at a near field achieves more uniform coverage and a reduction in the number of beams.
For example, the quantization related to the angle and the distance may be performed using the following Expression 8.
[Math. 8]

$$D_n \leftarrow b^n \cdot d_0 \cos^2 \omega, \quad n = 0,1,2,\dots \qquad \text{(Expression 8)}$$

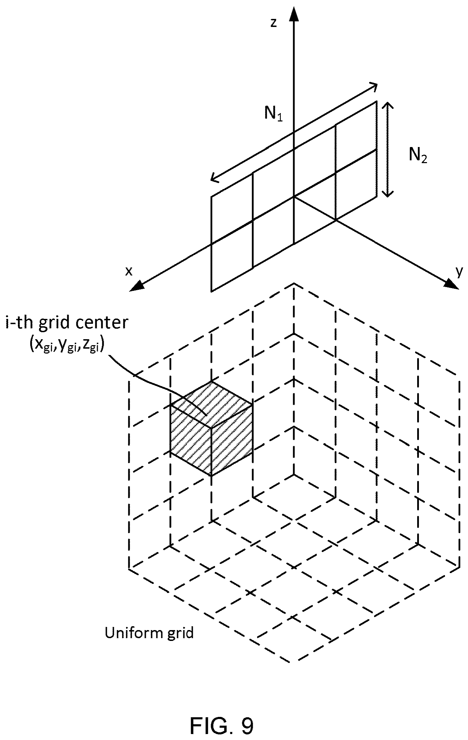

FIG. 9 is a diagram to show an example of the uniform grid in orthogonal coordinates. In the example shown in FIG. 9, the uniform grid of orthogonal coordinates for the RIS (RIS-NCR) is shown.
In FIG. 9, $(x_{gi}, y_{gi}, z_{gi})$ may indicate center coordinates of an i-th grid obtained from a grid index i.
A uniform grid RTC may be calculated according to at least one of the following Options 1 and 2.
The uniform grid RTC may be calculated using Equation 9 below (Option 1).
[Math. 9]

$$w = \exp\left(-j2\pi D_{gi}\right)$$

$$D_{gi}(n_1, n_2) = \sqrt{\left(x_{gi} - \left(n_1 - \frac{N_1}{2}\right)\frac{\lambda}{2}\right)^2 + \left(y_{gi}\right)^2 + \left(z_{gi} - \left(n_2 - \frac{N_2}{2}\right)\frac{\lambda}{2}\right)^2}$$

$$\text{(Equation 9)}$$

The uniform grid RTC may be calculated using Equation 10 below (Option 2).
[Math. 10]

$$W = \left(W_{N_1,\theta} \otimes W_{N_2,\theta}\right) \circ W_D$$

$$\left[W_{N_1,\theta}\right]_{n_1} = \exp\left(-j\pi\theta n_1\right)$$

$$\left[W_{N_2,\varphi}\right]_{n_2} = \exp\left(-j\pi\varphi n_2\right)$$

$$[W_D]_{(n_1,n_2)} = \left(x_{gi} - \left(n_1 - \frac{N_1}{2}\right)\frac{\lambda}{2}\right)^2 + (y_{gi})^2 + \left(z_{gi} - \left(n_2 - \frac{N_2}{2}\right)\frac{\lambda}{2}\right)^2$$

$$n_1 = 0,1,...,N_1 - 1$$

$$n_2 = 0,1,...,N_2 - 1$$

(Equation 10)

Here, θ may be calculated using the following Equation 11.
[Math. 11]

$$\theta = \sin\mu\cos\nu, \ \varphi = \sin\nu$$ (Equation 11)

Here, µ may represent an azimuth angle, and v may represent an elevation angle. µ and v may be obtained by a specific coordinate transformation.

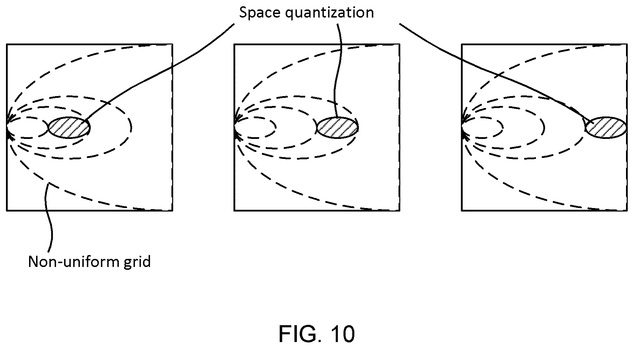

FIG. 10 is a diagram to show an example of the non-uniform grid in spherical coordinates.

According to Embodiment 1-2, it is possible to appropriately quantize the angle (angle information) and the distance (distance information) in the notification of the codebook.

As described above, according to the first embodiment, the codebook/precoder related to the RIS can be appropriately designed.

<Second Embodiment>

A second embodiment relates to adaptation of an aperture in an RIS.

The second embodiment is broadly classified into Embodiments 2-1 and 2-2. Embodiment 2-1 or 2-2 below may be applied, or Embodiments 2-1 or 2-2 below may be applied in combination.

An RIS-NCR may receive information (configuration information) related to control of an aperture (for example, antenna element) from a NW. The RIS-NCR may determine the aperture/antenna element to be used for a signal for a terminal, based on the information.

<<Embodiment 2-1>>

An RIS (RIS-NCR) may select/determine/judge the aperture to be used among apertures included in the RIS.

Embodiment 2-1 is broadly classified into Embodiments 2-1-1 and 2-1-2. Embodiment 2-1-1 or 2-1-2 below may be applied, or Embodiments 2-1-1 and 2-1-2 below may be applied in combination.

{Embodiment 2-1-1}

An undesired element (e.g., antenna element) of an RIS may be configured to be off. The information related to such configuration may be included in the information related to control of the aperture received from the NW.

The undesired element of the RIS may be configured to not scatter (or reflect/refract) an incident signal.

The undesired element of the RIS may be configured to diffuse or randomly scatter (or reflect/refract) the incident signal.

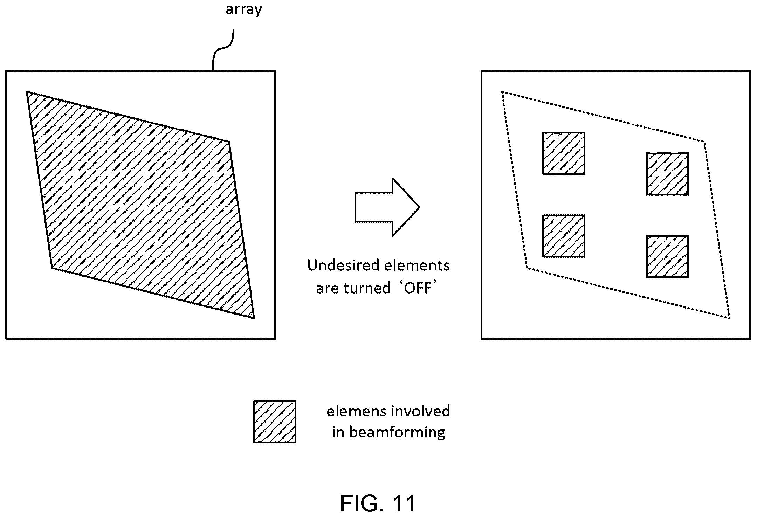

FIG. 11 is a diagram to show an example of aperture adaptation according to Embodiment 2-1-1. In the example shown in FIG. 11, elements related to beamforming are selected from among the elements of the RIS. Thereafter, the undesired elements of the RIS are configured to be an OFF state, and only desired elements of the RIS are used (are in an ON state).

{Embodiment 2-1-2}

Beamforming and aperture adaptation may be used in combination.

Information related to the beamforming may include, for example, information related to a beamforming vector of the RIS.

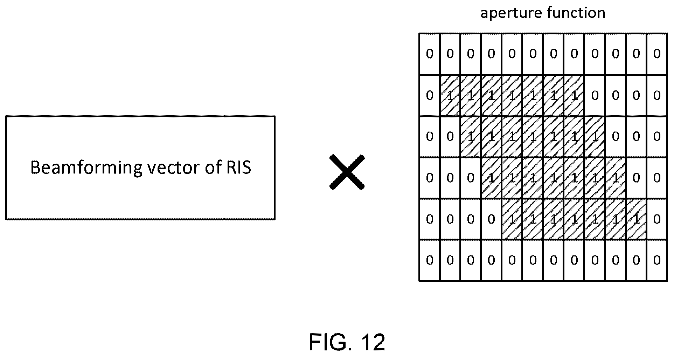

For example, a (desired, actually used) aperture may be represented by a value (e.g., an aperture function) that indicates the ON/OFF state of each RIS element. In addition, the (desired, actually used) aperture may be applied to the beamforming vector of the RIS (see FIG. 12).

For example, when a value (for example, an aperture function) corresponding to an RIS element is a first value (for example, 0), this may indicate that the RIS element turns to the OFF state. For example, when the value (for example, the aperture function) corresponding to the RIS element is a second value (for example, 1), this may indicate that the RIS element turns to the ON state.

Aperture adaptation may be used to control a beam shape (e.g., at least one of beam width, sidelobes, mainlobe, and focal point shape/size).

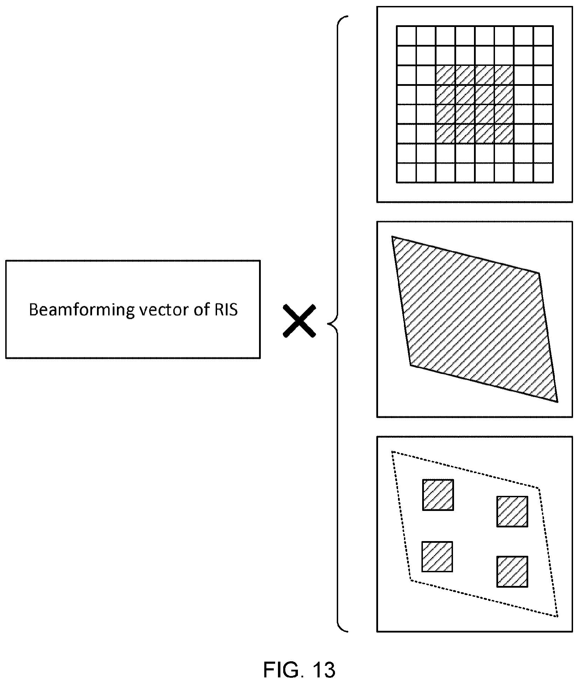

FIG. 13 is a diagram to show another example of the aperture adaptation according to Embodiment 2-1-2. In the example shown in FIG. 13, an example in which aperture adaptation is used together with a beamforming vector of the RIS is shown.

In the example shown in FIG. 13, when specific elements at the center of the RIS are used in a square shape among the elements of the RIS, adaptation for the beam width is possible.

In the example shown in FIG. 13, when elements of the RIS are used in a parallelogram (rhombus) shape among the elements of the RIS, crosstalk interference can be reduced by controlling the sidelobe.

In the example shown in FIG. 13, using only specific elements among the elements selected in the parallelogram (rhombus) shape to control the mainlobe improves the robustness and enables LOS-MIMO multiplexing.

<<Embodiment 2-2>>

In Embodiment 2-2, aperture control in the RIS (RIS-NCR) will be described.

Embodiment 2-2 is broadly classified into Embodiments 2-2-1 and 2-2-2. Embodiment 2-2-1 or 2-2-2 below may be applied, or Embodiments 2-2-1 and 2-2-2 below may be applied in combination.

{Embodiment 2-2-1}

A mode related to the aperture of the RIS-NCR may be defined.

The RIS-NCR may judge the aperture to use, based on the mode.

The mode may include, for example, first to third modes.

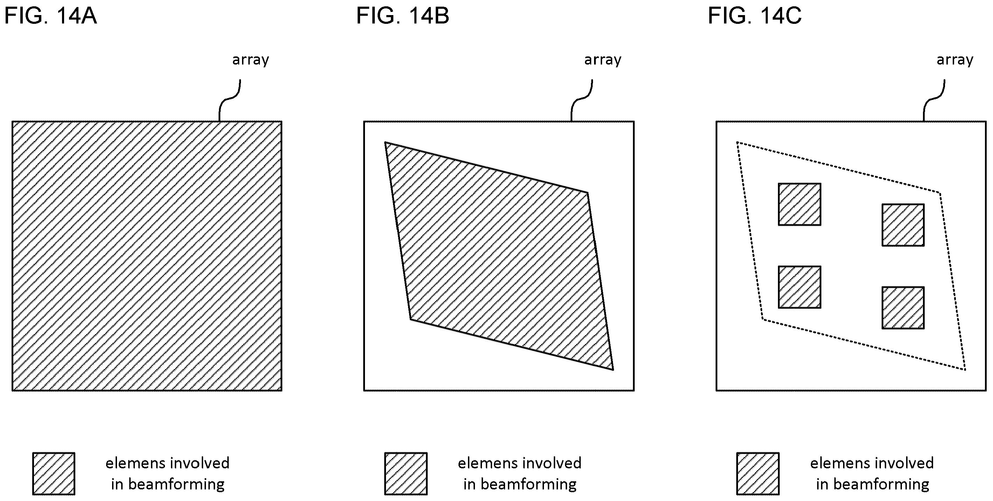

The first mode may be a mode in which some/all of the elements of the RIS are used in a square shape. The first mode may be referred to as, for example, a fallback mode (see FIG. 14A).

The second mode may be, for example, a mode in which some of the elements of the RIS are used in a parallelogram (rhombus) shape. The second mode may be referred to as, for example, a semi-continuous mode (see FIG. 14B).

The third mode may be a mode in which only a specific RIS among the elements of the RIS is used. A part of the elements of the RIS are selected a parallelogram (rhombus) shape and the specific RIS may be determined from the selected elements. The third mode may be referred to as, for example, a discrete mode (see FIG. 14C).

{Embodiment 2-2-2}

The shape/size of the aperture of the RIS-NCR to be used may be indicated by a specific method. The information related to such indication may be included in the information related to control of the aperture received from the NW.

For example, the shape/size of the aperture of the RIS-NCR to be used may be determined by a bitmap/parameter indicating the ON/OFF state of the elements of the RIS to be used.

The shape/size of the aperture (e.g. parallelogram (diamond) shaped aperture) in the second/third mode may be indicated in a specific method.

The specific method may be, for example, a method based on the length and angle of two sides with reference to a specific point (for example, a reference point) of the elements of the RIS (selected elements of the RIS). For example, the aperture to be used may be determined according to Expression 12 below.

[Math. 12]

$$arg(\vec{L_{\vec{v}}}), \ |\vec{L_{\vec{v}}}|, \ arg(\vec{L_{\vec{v}}}), \ and \ |\vec{L_{\vec{u}}}| \qquad \text{(Expression 12)}$$

In the third mode, the size/number of subarrays to be used may be additionally indicated.

According to the second embodiment, the element/aperture of the RIS to be used can be appropriately determined/selected.

<Third Embodiment>

A third embodiment relates to beamforming control from a NW (for example, a base station (BS)) to an RIS (RIS-NCR).

The third embodiment is broadly classified into Embodiments 3-1 to 3-5. Any of Embodiments 3-1 to 3-5 may be applied, or at least two of Embodiments 3-1 to 3-5 may be applied in combination.

<<Embodiment 3-1>>

In Embodiment 3-1, implementation of the RIS (RIS-NCR).will be described.

The implementation of the RIS-NCR may follow at least one of the following Options 3-1-1 to 3-1-3.

[Option 3-1-1]

An NCR-MT may control one RIS (e.g., a large RIS).

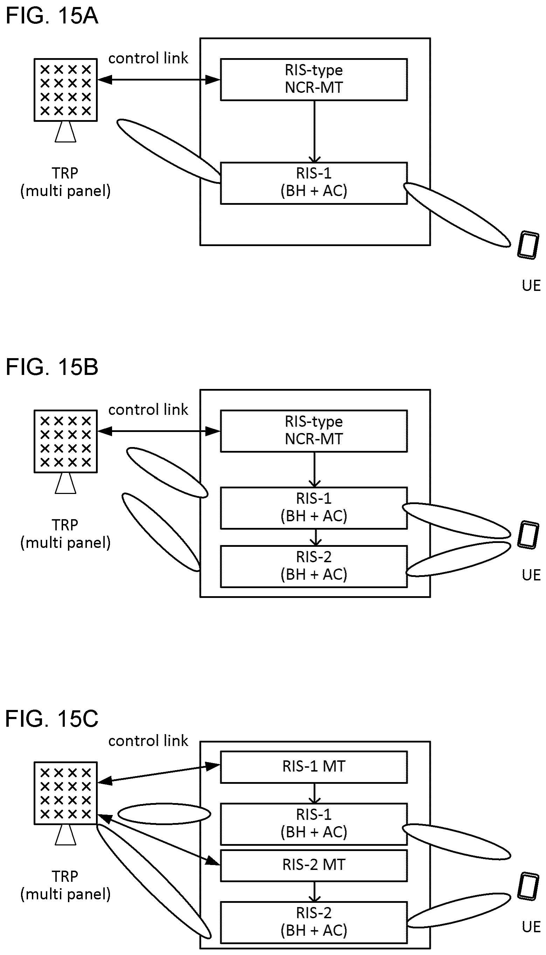

FIG. 15A is a diagram to show an example of RIS implementation according to Option 3-1-1. In the example shown in FIG. 15A, the NCR-MT (RIS-type NCR-MT) controls the RIS (RIS-1), based on a control link from a TRP (BS). Specifically, the NCR-MT controls the RIS to control at least one of a beam of a backhaul link (between the BS and the RIS-NCR) and a beam of an access link (between the UE and the RIS-NCR).

[Option 3-1-2]

The NCR-MT may control a plurality of RISs.

FIG. 15B is a diagram to show an example of RIS implementation according to Option 3-1-2. In the example shown in FIG. 15B, the NCR-MT (RIS-type NCR-MT) controls the RIS (RIS-1 and RIS-2), based on the control link from the TRP (BS).

Specifically, the NCR-MT controls the RIS to control at least one of the beam of the backhaul link (between the BS and the RIS-NCR) corresponding to each RIS and the beam of the access link (between the UE and the RIS-NCR) corresponding to each RIS.

[Option 3-1-3]

One NCR-MT may correspond to one RIS and control each RIS corresponding to the NCR-MT.

The control of the RIS of a certain NCR-MT and the control of the RIS of another NCR-MT may be performed independently.

The control of the RIS of a certain NCR-MT and the control of the RIS of another NCR-MT may be performed in association with each other.

FIG. 15C is a diagram to show an example of RIS implementation according to Option 3-1-3. In the example shown in FIG. 15C, based on the control link from the TRP (BS), the NCR-MT corresponding to the RIS-1 (RIS-1 MT) controls the RIS-1, and the NCR-MT corresponding to the RIS-2 (RIS-2 MT) controls the RIS-2. Specifically, each NCR-MT controls corresponding RIS to control at least one of the beam of the backhaul link (between the BS and the RIS-NCR) corresponding to each RIS and the beam of the access link (between the UE and the RIS-NCR) corresponding to each RIS.

According to Embodiment 3-1, the RIS-NCR can be appropriately implemented.

<<Embodiment 3-2>>

Embodiment 3-2 describes information that the RIS-NCR receives from the NW or transmits to the NW.

RRC signaling/signaling by OAM may be used for the information.

Embodiment 3-2 is broadly classified into Embodiments 3-2-1 and 3-2-2. Any of Embodiments 3-2-1 and 3-2-2 below may be applied, or Embodiments 3-2-1 and 3-2-2 below may be applied in combination.

{Embodiment 3-2-1}

The NW/RIS-NCR may transmit/receive information about the position/posture/attitude of the NW/RIS-NCR.

For example, the RIS-NCR may transmit/report information about the position/posture/attitude of the RIS-NCR to the NW.

For example, the NW may transmit/configure information about the position/posture/attitude of the BS to the RIS-NCR.

The RIS-NCR may control the RIS, based on the configured information.

{Embodiment 3-2-2}

The RIS-NCR may report information related to capability of beamforming to the NW.

The information may include, for example, information indicating an operation mode.

The operation mode may indicate, for example, whether the RIS controlled by the NCR is a reflective type or a transmissive (refractive) type.

The operation mode may indicate, for example, that the RIS controlled by the NCR operates semi-statically or dynamically.

The information may include, for example, information related to the aperture.

The information related to the aperture may indicate, for example, at least one of an array size of the RIS, a configuration of a subarray/panel, and a position of a reference point.

The information may include, for example, information related to a beam set.

The information related to the beam set may include, for example, information related to an implementation-based beam set. The information related to the implementation-based beam set may be, for example, information indicating at least one of a beam number (the number of beams) and beam characteristics.

The information related to beam characteristics may be, for example, information related to at least one of a beam direction, a focal length, a beam width, and a beam gain.

The information related to beam set may include, for example, information related to a codebook-based beam set. The information related to codebook-based beam set may be, for example, information indicating a subset of a designated beam codebook.

The codebook may be a near-field (NF)/far-field (FF) codebook.

According to Embodiment 3-2, it is possible to perform appropriate notification of information necessary for the operation/control of the RIS-NCR.

<<Embodiment 3-3>>

Embodiment 3-3 relates to an indication of beamforming from the NW to the RIS-NCR.

Embodiment 3-3 is broadly classified into Embodiments 3-3-1 to 3-3-3. Any of Embodiments 3-3-1 to 3-3-3 below may be applied, or at least two of Embodiments 3-3-1 to 3-3-3 below may be applied in combination.

The RIS-NCR may receive indication information related to beamforming from the NW. The RIS-NCR may judge a codebook/precoder to be applied to a signal for another node (e.g., UE/NW node), based on the indication information.

{Embodiment 3-3-1}

Indication of beamforming from the NW to the RIS-NCR may be indication based on a codebook (codebook-based indication).

For example, the NW may indicate a codebook (or codeword/precoder) to be used to the RIS-NCR. The codebook/precoder may be at least one codebook/precoder described in the first embodiment.

{Embodiment 3-3-2}

Indication of beamforming from the NW to the RIS-NCR may be indication based on a position (position-based indication). The position may be a position of the base station/UE.

For example, the NW may indicate position information (e.g., coordinates) of the UE to the RIS-NCR.

{Embodiment 3-3-3}

The indication of beamforming from the NW to the RIS-NCR may be indication based on implementation (implementation-based indication).

For example, the NW may indicate, to the RIS-NCR, a beam index (one or more beam indices) of a beam set reported from the RIS-NCR.

According to Embodiment 3-3, it is possible to appropriately define the beamforming indication necessary between the NW and the RIS-NCR.

<<Embodiment 3-4>>

Embodiment 3-4 describes indication related to an aperture from the NW to the RIS-NCR.

The NW may transmit, to the RIS-NCR, indication related to the aperture of the (desired) RIS-NCR.

The indication may include, for example, at least one piece of information described in the second embodiment.

According to Embodiment 3-4, the indication related to the aperture between the NW and the RIS-NCR can be appropriately defined.

<<Embodiment 3-5>>

Reporting of capability of the RIS-NCR (NCR-MT) may be defined.

The report may include information related to at least one of a position, an operation mode, an aperture, an implementation-based beam set, and a codebook-based beam set.

The reporting may be performed using higher layer signaling (RRC signaling/signaling by OAM).

A method of controlling the RIS-NCR may be defined from the NW. The control may include, for example, at least one of beam control of a backhaul link, beam control of an access link, control of a reference point of an RIS, and aperture control of the RIS.

The beam control of the backhaul link may be explicitly/implicitly indicated independently of the control of the control link beam. The beam control of the backhaul link may be, for example, joint beam control of the access link and the backhaul link.

The beam control of the access link may include, for example, at least one of codebook-based beam control, position-based beam control, and implementation-based beam control.

The control of the reference point of the RIS may include indication of a reference point. The reference point may indicate the center of the RIS array or may follow an RIS report.

The aperture control of the RIS may include, for example, at least one of indication of an adaptation mode and indication of a shape of an aperture (to be used).

According to the third embodiment, it is possible to appropriately perform beamforming control between the NW and the RIS-NCR and implement the RIS.

<Supplements>

{Notification of Information to UE/Relay Apparatus}

Notification of any information to a UE/relay apparatus (from a network (NW) (for example, a base station (BS))) (in other words, reception of any information from the BS in the UE/relay apparatus) in the above-described embodiments may be performed by using physical layer signaling (for example, DCI), higher layer signaling (for example, RRC signaling, MAC CE, signaling by OAM), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE/relay apparatus in the above-described embodiments may be performed periodically, semi-persistently, or aperiodically.

{Notification of Information from UE/Relay Apparatus}

Notification of any information from a UE/relay apparatus (to an NW) (in other words, transmission/reporting of any information to the BS from the UE/relay apparatus) in the above-described embodiments may be performed by using physical layer signaling (for example, UCI), higher layer signaling (for example, RRC signaling, MAC CE, signaling by OAM), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE/relay apparatus in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/relay apparatus/BS may be notified of the specific condition by using higher layer signaling/physical layer signaling.

At least one of the above-described embodiments may be applied only to a UE/relay apparatus that has reported a specific capability (capability, capability information, UE capability. relay apparatus capability) or that supports the specific UE capability.

The specific capability may indicate at least one of the following:

- supporting of specific processing/operation/control/information for at least one of the above-described embodiments
- supporting of RIS type NCR/NCR/NCR-MT
- supporting of a codebook for NF/FF
- supporting of aperture adaptation.

The specific capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE/relay apparatus is configured/activated/triggered with specific information related to the above-described embodiment (or performance of the operation of the above-described embodiment) by higher layer signaling/physical layer signaling. For example, the specific information may be information indicating enabling of operation of the above-described embodiment, any RRC parameter for a specific release (for example, Rel. 18/19), or the like.

When the UE does not support at least one of the specific UE capabilities above or is not configured with the specific information, operation of Rel. 15/16/17/18 may be applied, for example.

(Supplementary Note A)

Regarding one embodiment of the present disclosure, the following supplementary notes of the invention will be given.

{Supplementary Note A-1}

A relay apparatus including:

a receiving section that receives angle information and distance information related to a terminal; and
a control section that determines, based on at least one of the angle information and the distance information, a precoder to be applied to a signal directed to the terminal, the precoder being calculated based on multiplication of a first matrix and a second matrix.

{Supplementary Note A-2}

The relay apparatus according to supplementary note A- 1, wherein the first matrix is a matrix depending on an angle, and the second matrix is a matrix depending on a distance.

{Supplementary Note A-3}

The relay apparatus according to supplementary note A-1 or A-2, wherein the first matrix is a matrix depending on a reference point of a subarray and the second matrix is a matrix depending on a distance.

{Supplementary Note A-4}

The relay apparatus according to any one of supplementary notes A-1 to A-3, wherein quantization of the angle information and quantization of the distance information are performed separately or jointly.

(Supplementary Note B)

Regarding one embodiment of the present disclosure, the following supplementary notes of the invention will be given.

{Supplementary Note B-1}

A relay apparatus including:

a receiving section that receives configuration information related to control of an antenna element; and
a control section that determines an antenna element to be used for a signal directed to a terminal, based on the configuration information.

{Supplementary Note B-2}

The relay apparatus according to supplementary note B-1, wherein the configuration information is information indicating an off state of the antenna element.

{Supplementary Note B-3}

The relay apparatus according to supplementary note B-1 or B-2, wherein the control section determines the antenna element, based on the configuration information and a beamforming vector.

{Supplementary Note B-4}

The relay apparatus according to any one of supplementary notes B-1 to B-3, wherein the configuration information is information indicating a mode related to the antenna element.

(Supplementary Notes C)

Regarding one embodiment of the present disclosure, the following supplementary notes of the invention will be given.

{Supplementary Note C-1}

A relay apparatus including:

a receiving section that receives indication information related to beamforming; and
a control section that judges a codebook to be applied to a signal directed to a terminal, based on the indication information.

{Supplementary Note C-2}

The relay apparatus according to supplementary note C-1, wherein the indication information is information indicating the codebook to be applied or information indicating a position of the terminal.

{Supplementary Note C-3}

The relay apparatus according to supplementary note C-1 or C-2, wherein the control section controls reporting of information related to a position and attitude of the relay apparatus.

{Supplementary Note C-4}

The relay apparatus according to any one of supplementary notes C-1 to C-3, wherein the control section controls reporting of information related to capability of beamforming.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

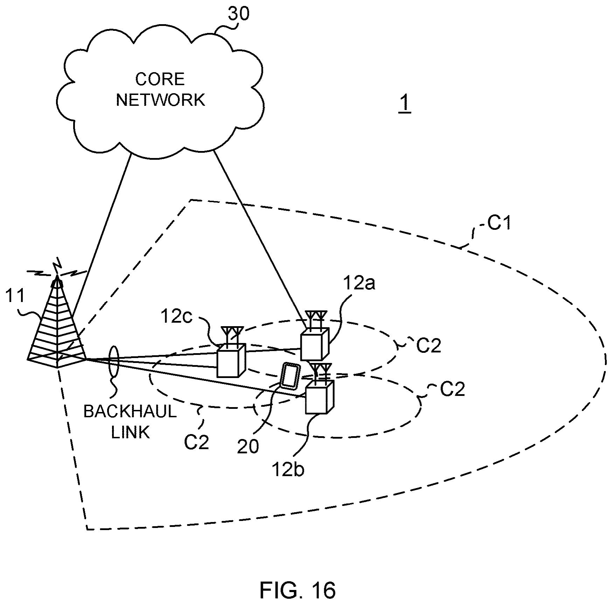

FIG. 16 is a diagram to show an example of a schematic structure of the radio communication system according to one embodiment. The radio communication system 1 (which may be referred to simply as system 1) may be a system implementing communication using Long Term Evolution (LTE), 5th generation mobile communication system New Radio (5G NR), or the like the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node," an "NCR," and an "RIS-NCR."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and a maintenance operation management (Operation, Administration and Maintenance (Management) (OAM)), for example. Note that one network node may provide a plurality of functions. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

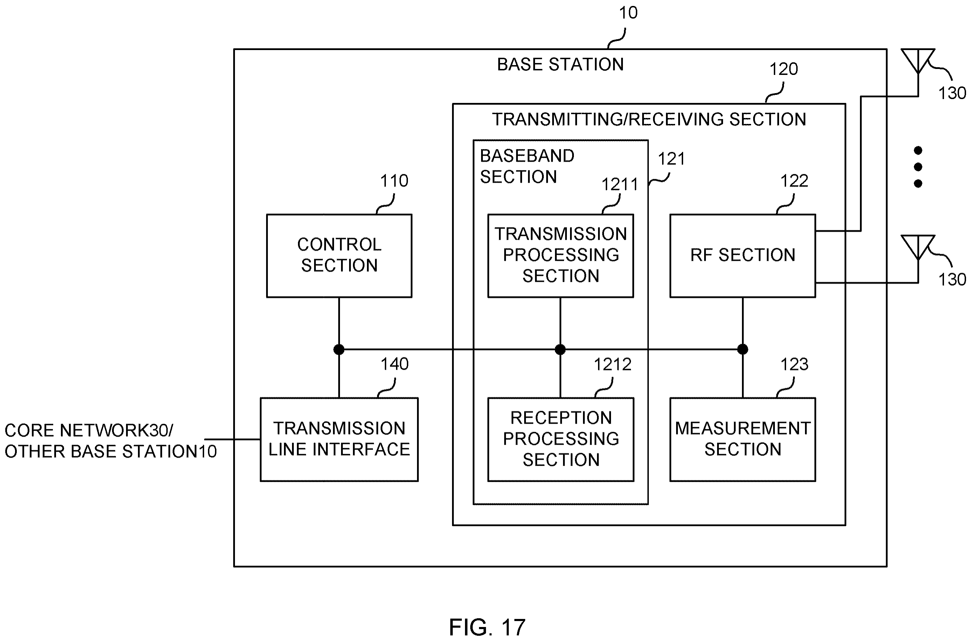

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beamforming (for example, precoding), analog beamforming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node providing an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit angle information and distance information related to a terminal to a relay apparatus. The control section 110 may indicate, by using at least one of the angle information and the distance information, a precoder to be applied to a signal directed to the terminal, the precoder being calculated based on multiplication of a first matrix and a second matrix to the relay apparatus (first embodiment).

The transmitting/receiving section 120 may transmit configuration information related to control of an antenna element to a relay apparatus. The control section 110 may indicate the antenna element to be used to a signal directed to the terminal by using the configuration information to the relay apparatus (second embodiment) . .

The transmitting/receiving section 120 may transmit indication information related to beamforming to the relay apparatus. The control section 110 may indicate a codebook to be applied to a signal directed to the terminal to the relay apparatus by using the indication information (third embodiment).

(User Terminal)

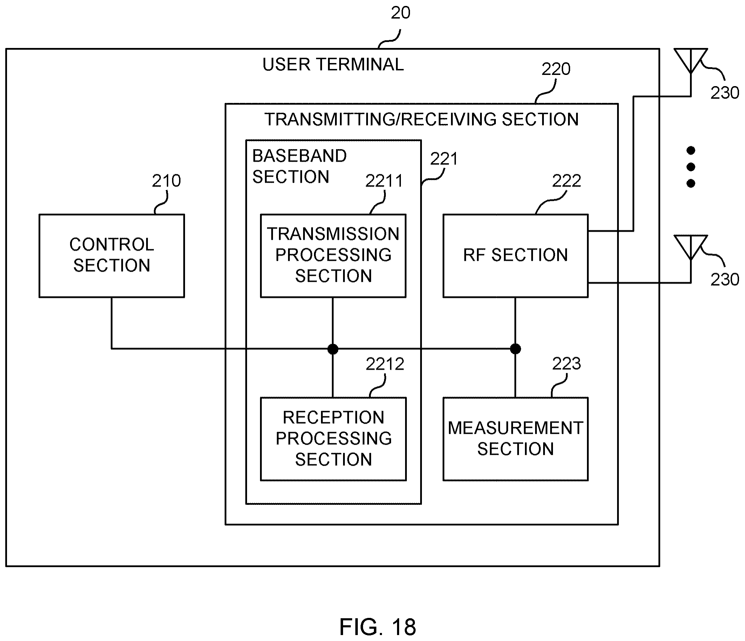

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beamforming (for example, precoding), analog bbeamforming(for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a channel measurement resource. The channel measurement resource may be, for example, a non zero power (NZP) CSI-RS resource. Note that the measurement section 223 may derive interference measurement for CSI calculation, based on an interference measurement resource. The interference measurement resource may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, the CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

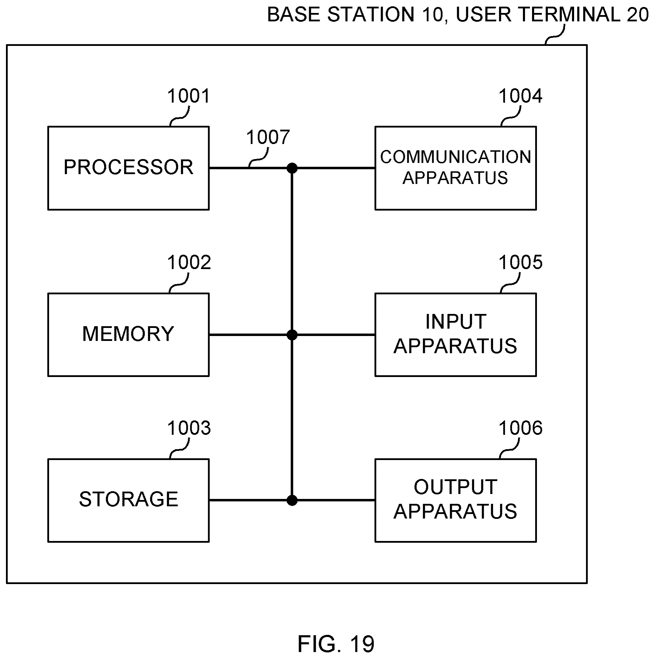

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

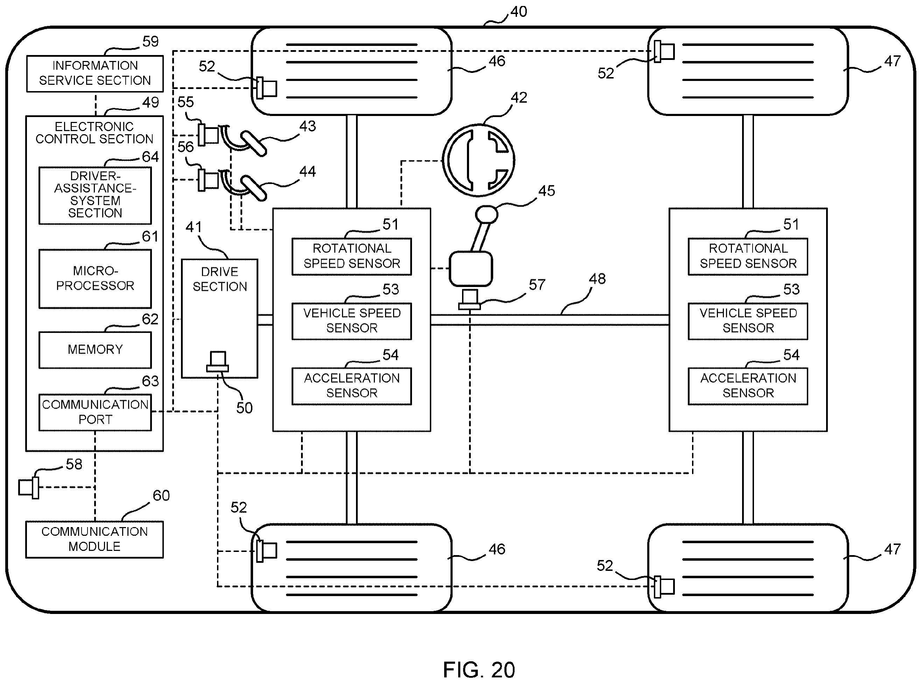

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A relay apparatus comprising:

   a receiving section that receives configuration information related to control of an antenna element; and
   a control section that determines an antenna element to be used for a signal directed to a terminal, based on the configuration information.

2. The relay apparatus according to claim 1, wherein
   the configuration information is information indicating an off state of the antenna element.

3. The relay apparatus according to claim 1, wherein

the control section determines the antenna element, based on the configuration information and a beamforming vector.

4. The relay apparatus according to claim 1, wherein
the configuration information is information indicating a mode related to the antenna element.

5. A relay method comprising:

   receiving configuration information related to control of an antenna element; and
   determining an antenna element to be used for a signal directed to a terminal, based on the configuration information.

6. A base station comprising:

   a transmitting section that transmits configuration information related to control of an antenna element; and
   a control section that uses the configuration information to indicate an antenna element to be used for a signal directed to a terminal.

FIG. 1A     gNB

UE

FIG. 1B     gNB

UE

EP 4 664 780 A1

FIG. 2

FIG. 3

FIG. 4A

$$-x_n \sin \omega$$

$$x_n$$

$$\omega$$

FIG. 4B

$$\sqrt{(x_n - x')^2 + D_F^2}$$

$$x_n$$

$$x'$$

$$D_F$$

FIG. 4C

$$-x_n \sin \omega + \frac{x_n^2 \cos^2 \omega}{2D}$$

$$x_n$$

$$\omega$$

$$D$$

FIG. 5

FIG. 6

FIG. 7

FIG. 8

FIG. 9

FIG. 10

array

Undesired elements are turned 'OFF'

elemens involved in beamforming

FIG. 11

aperture function

Beamforming vector of RIS

×

FIG. 12

FIG. 13

FIG. 14A

FIG. 14B

FIG. 14C

array

elemens involved in beamforming

## FIG. 15A

control link

RIS-type
NCR-MT

RIS-1
(BH + AC)

TRP
(multi panel)

UE

## FIG. 15B

control link

RIS-type
NCR-MT

RIS-1
(BH + AC)

RIS-2
(BH + AC)

TRP
(multi panel)

UE

## FIG. 15C

control link

RIS-1 MT

RIS-1
(BH + AC)

RIS-2 MT

RIS-2
(BH + AC)

TRP
(multi panel)

UE

FIG. 16

FIG. 17

EP 4 664 780 A1

EP 4 664 780 A1

FIG. 18

BASE STATION 10, USER TERMINAL 20

1001
PROCESSOR

1007

1004
COMMUNICATION
APPARATUS

1002
MEMORY

1005
INPUT
APPARATUS

1003
STORAGE

1006
OUTPUT
APPARATUS

FIG. 19

FIG. 20

## INTERNATIONAL SEARCH REPORT

International application No.

**PCT/JP2023/004650**

| A. | CLASSIFICATION OF SUBJECT MATTER |
|---|---|

*H04B 7/0456*(2017.01)i; *H01Q 15/14*(2006.01)i; *H04B 7/0413*(2017.01)i
FI:    H04B7/0456 100; H01Q15/14 Z; H04B7/0413 300

According to International Patent Classification (IPC) or to both national classification and IPC

| B. | FIELDS SEARCHED |
|---|---|

Minimum documentation searched (classification system followed by classification symbols)

H04B7/0456; H01Q15/14; H04B7/0413

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | WO 2022/000408 A1 (ZTE CORPORATION) 06 January 2022 (2022-01-06) page 5, line 11 to page 24, line 14, fig. 1-3, 6A-6C | 1, 3-6 |
| Y | | 2 |
| Y | WO 2022/203754 A1 (QUALCOMM INCORPORATED) 29 September 2022 (2022-09-29) paragraphs [0077]-[0087], fig. 4-5 | 2 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 August 2023** | **29 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/004650**

| Patent document cited in search report | Publication date (day/month/year) | Patent family member(s) | Publication date (day/month/year) |
|---|---|---|---|
| WO 2022/000408 A1 | 06 January 2022 | CN 115699603 A | |
| | | KR 10-2023-0025425 A | |
| WO 2022/203754 A1 | 29 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300*, April 2010